# EUROPÄISCHE PATENTSCHRIFT

(11) **EP 4 115 437 B1**
(45) Veröffentlichungstag und Bekanntmachung des Hinweises auf die Patenterteilung: **19.11.2025**
(21) Anmeldenummer: 21715145.5
(22) Anmeldetag: 11.03.2021
(51) Int. Cl.: H01H 33/56, H02B 13/065

(54) **ERMITTELN EINER FLUIDDICHTE IN EINER ELEKTRISCHEN VORRICHTUNG**
DETERMINATION OF A FLUID DENSITY IN AN ELECTRICAL EQUIPMENT
DÉTERMINATION DE LA DENSITY D'UN FLUIDE DANS UN DISPOSITIF ÉLECTRIQUE

(30) Priorität: 09.04.2020 DE 102020204624
(43) Veröffentlichungstag der Anmeldung: 11.01.2023
(73) Patentinhaber: Siemens Energy Global GmbH & Co. KG, 81739 München (DE)
(72) Erfinder: PILZ, Mario, 13591 Berlin (DE); HEINECKE, Matthias, 14163 Berlin (DE)
(86) Internationale Anmeldenummer: PCT/EP2021/056132
(87) Internationale Veröffentlichungsnummer: WO 2021/204488

(56) Entgegenhaltungen:
- DE-A1- 102005 007 227
- DE-T2- 69 604 842
- US-B1- 6 205 846

## Beschreibung

Die Erfindung betrifft ein Verfahren zum Ermitteln einer Fluiddichte eines Fluids in einer gekapselten elektrischen Vorrichtung.

Viele elektrische Vorrichtungen sind zumindest teilweise mit einem Fluid, das heißt mit einem Gas oder einer Flüssigkeit, als Isoliermedium befüllt, beispielsweise um die elektrische Durchschlagsfestigkeit in einer elektrischen Vorrichtung zu erhöhen, Lichtbögen in einer elektrischen Vorrichtung zu löschen und/oder eine elektrische Vorrichtung zu kühlen. Beispielsweise werden gasisolierte Schaltanlagen mit einem unter Druck stehenden Isoliergas wie Schwefelhexafluorid oder Luft befüllt, und Transformatoren werden oft mit einem Transformatorenöl befüllt. Dabei ist die Fluiddichte des Fluids in der elektrischen Vorrichtung oft eine, insbesondere für die Betriebssicherheit der elektrischen Vorrichtung, wichtige und kritische Größe. Beispielsweise hängt die Durchschlagsfestigkeit eines Isoliergases in einer gasisolierten Schaltanlage entscheidend von der Gasdichte des Isoliergases ab. Ein Austreten von Isoliergas wie Schwefelhexafluorid aus einer gasisolierten Schaltanlage kann überdies zu monetären Strafen für den Betreiber der Schaltanlage aufgrund der umweltschädigenden Wirkung des Isoliergases führen.

Die Fluiddichte in einer elektrischen Vorrichtung wird deshalb in der Regel überwacht, um ein Austreten von Fluid aus der elektrischen Vorrichtung zu detektieren und erforderlichenfalls einer Änderung der Fluiddichte entgegenzuwirken beziehungsweise die elektrische Vorrichtung bei einer kritischen Änderung der Fluiddichte aus Sicherheitsgründen abzuschalten. Die Messgenauigkeit bei der Erfassung einer Fluiddichte in einer elektrischen Vorrichtung unterliegt Schwankungen, die insbesondere durch externe Wettereinflüsse verursacht werden können. Dadurch sind der Erkennung von Änderungen der Fluiddichte insbesondere in kurzen Zeiträumen Grenzen gesetzt. Der Einfluss sich ändernder Wetterbedingungen auf die Messergebnisse von Fluiddichten wird in der Regel nur über lange Beobachtungsfenster (mehrere Wochen oder Monate) erfasst und ausgewertet, was die Berechnung langfristiger Trends ermöglicht. Das Dokument DE 696 04 842 T2 beschreibt eine Vorrichtung mit einem Mikroprozessor, welcher eingerichtet ist, die Dichte eines Gases anhand von Zustandsgleichungen zu berechnen. Das Dokument US 6 205 846 B1 befasst sich mit der Ermittlung einer Leckagerate einer gasisolierten gekapselten Vorrichtung.

Der Erfindung liegt die Aufgabe zugrunde, das Ermitteln einer Fluiddichte eines Fluids in einer gekapselten elektrischen Vorrichtung zu verbessern, insbesondere um Änderungen der Fluiddichte auch kurzfristig zuverlässig zu detektieren.

Die Aufgabe wird erfindungsgemäß durch ein Verfahren mit den Merkmalen des Anspruchs 1, ein Computerprogramm mit den Merkmalen des Anspruchs 14 und eine elektrische Vorrichtung mit den Merkmalen des Anspruchs 15 gelöst.

Vorteilhafte Ausgestaltungen der Erfindung sind Gegenstand der Unteransprüche.

Bei dem erfindungsgemäßen Verfahren zum Ermitteln einer Fluiddichte eines Fluids in einer gekapselten elektrischen Vorrichtung werden mit einer Sensoreinheit Messdaten erfasst, aus denen Messwerte für die Fluiddichte abgeleitet werden, und es werden Wetterdaten zu Wetterbedingungen in einer Umgebung der elektrischen Vorrichtung gesammelt. Durch maschinelles Lernen wird ein digitales Modell für den Einfluss der Wetterbedingungen auf eine Messabweichung eines Messwerts von der richtigen Fluiddichte erzeugt. Mit dem digitalen Modell wird ein Korrekturwert für Messwerte in Abhängigkeit von den Wetterdaten berechnet und ein Messwert wird mit dem Korrekturwert korrigiert.

Das erfindungsgemäße Verfahren ermöglicht somit eine Korrektur von Messwerten der Fluiddichte, die Einflüsse von Wetterbedingungen in einer Umgebung der elektrischen Vorrichtung berücksichtigt. Dazu wird durch maschinelles Lernen ein digitales Modell trainiert, das den Einfluss der Wetterbedingungen auf eine Messabweichung der Messwerte modelliert. Dadurch können insbesondere auch kurzfristige Einflüsse der Wetterbedingungen auf die Messung der Fluiddichte berücksichtigt werden, wodurch die Genauigkeit der Messung der Fluiddichte erheblich verbessert wird und Änderungen der Fluiddichte beispielsweise durch Fluidverluste aufgrund von Undichtigkeiten der elektrischen Vorrichtung schnell und zuverlässig detektiert werden können. Insbesondere wird dadurch die Betriebssicherheit der elektrischen Vorrichtung erhöht und die Wartbarkeit der elektrischen Vorrichtung verbessert.

Bei einer Ausgestaltung des erfindungsgemäßen Verfahrens weist das digitale Modell ein künstliches neuronales Netz mit mehreren Schichten vernetzter künstlicher Neuronen auf. Vorzugsweise ist das künstliche neuronale Netz ein rekurrentes künstliches neuronales Netz und/oder weist wenigstens eine merkfähige Zelle auf. Unter einem rekurrenten künstlichen neuronalen Netz versteht man ein rückgekoppeltes künstliches neuronales Netz, dessen Neuronen in vertiefenden Schichten vernetzt sind mit Verbindungen von Neuronen einer Schicht nicht nur zu Neuronen einer tieferen Schicht sondern auch zu Neuronen derselben oder einer höheren Schicht. Unter einer merkfähigen Zelle wird eine Zelle mit so genanntem Long Short-Term Memory (LSTM) verstanden, das heißt eine Zelle mit einer Art lange anhaltenden Kurzzeitgedächtnis. Derartige Zellen werden auch LSTM-Zellen genannt und ein künstliches neuronales Netz mit LSTM-Zellen wird auch als ein künstliches neuronales LSTM-Netz genannt. Künstliche neuronale Netze mit vielen Schichten sind extrem lernfähig. Die LSTM-Technik sorgt für das gute und stabile Funktionieren derartiger künstlicher neuronaler Netze und die rekurrente Verschaltung von Neuronen ermöglicht unter anderem das Auffinden und Auswerten sequenzierter Informationen in den von dem künstlichen neuronalen Netz verarbeiteten Daten. Rekurrente künstliche neuronale LSTM-Netze werden bereits in vielen Bereichen erfolgreich eingesetzt, beispielsweise zur Handschrifterkennung, Spracherkennung und Maschinenübersetzung von Texten in verschiedene Sprachen. Das erfindungsgemäße Verfahren nutzt die Fähigkeiten derartiger künstlicher neuronaler Netze vorteilhaft zur Analyse und Korrektur von Messwerten der Fluiddichte in Abhängigkeit von Wetterdaten.

Bei einer weiteren Ausgestaltung des erfindungsgemäßen Verfahrens werden die Messdaten und/oder die Messwerte in eine Datenwolke (Cloud) übertragen und/oder der Korrekturwert wird mit dem digitalen Modell in einer Datenwolke berechnet. Durch die Übertragung der Messdaten und/oder Messwerte in eine Datenwolke können diese Daten orts- und benutzerunabhängig bereitgestellt und ausgewertet werden. Die Berechnung der Korrekturwerte mit dem digitalen Modell in einer Datenwolke ermöglicht vorteilhaft die Nutzung einer hohen Rechenkapazität, die von einer Datenwolke zur Verfügung gestellt werden kann.

Bei einer weiteren Ausgestaltung des erfindungsgemäßen Verfahrens werden zum Trainieren des digitalen Modells aus Messwerten und/oder Wetterdaten weitere Trainingswerte für Messwerte und/oder Wetterdaten generiert. Beispielsweise werden Trainingswerte durch zeitliches Verschieben von Wetterdaten gegenüber Messwerten, Skalierungen von Messwerten und/oder Wetterdaten und/oder Verschiebungen im Wertebereich der Messwerte generiert. Ferner können zum Trainieren des digitalen Modells Trainingswerte zu simulierten Fluidverlusten generiert werden, beispielsweise durch das Addieren von Werten aus simulierten Trendverläufen zu Messwerten. Diese Ausgestaltungen des erfindungsgemäßen Verfahrens sind insbesondere vorteilhaft, wenn zum Trainieren des digitalen Modells anfänglich nicht genügend geeignete Messwerte und/oder Wetterdaten vorliegen. Die Ausgestaltungen sehen das Erzeugen geeigneter weiterer Trainingswerte aus den (wenigen) vorliegenden Messwerten und/oder Wetterdaten durch so genannte Data Augmentation und/oder aus simulierten Fluidverlusten vor.

Bei einer weiteren Ausgestaltung des erfindungsgemäßen Verfahrens wird ein Berechnungszeitraum, beispielsweise ein Zeitraum von 24 Stunden, vorgegeben und mit dem digitalen Modell wird der Korrekturwert für Messwerte berechnet, die innerhalb des Berechnungszeitraums erfasst werden. Dadurch kann die Berücksichtigung des Einflusses der Wetterbedingungen auf die Messwerte der Fluiddichte vorteilhaft aktuell gehalten und mit den Ergebnissen für vorangegangene Berechnungszeiträume verglichen werden, beispielsweise um Trends in diesen Ergebnissen zu erkennen.

Bei einer weiteren Ausgestaltung des erfindungsgemäßen Verfahrens umfassen die Wetterdaten eine Temperatur, eine Windgeschwindigkeit, Niederschlag, eine Luftfeuchtigkeit und/oder einen Luftdruck in der Umgebung der elektrischen Vorrichtung. Diese Ausgestaltung des erfindungsgemäßen Verfahrens berücksichtigt vorteilhaft Wetterbedingungen, die die Messung der Fluiddichte vornehmlich beeinflussen.

Bei einer weiteren Ausgestaltung des erfindungsgemäßen Verfahrens wird das digitale Modell speziell für eine elektrische Vorrichtung erzeugt. Alternativ wird das digitale Modell für voneinander verschiedene, einander ähnelnde elektrische Vorrichtungen erzeugt. Eine Erzeugung eines digitalen Modells für nur eine bestimmte elektrische Vorrichtung ermöglicht eine Berücksichtigung spezieller Eigenschaften der Vorrichtung. Eine Erzeugung eines digitalen Modells für mehrere, einander ähnelnde elektrische Vorrichtungen ermöglicht vorteilhaft die Verwendung des Modells für eine ganze Klasse elektrischer Vorrichtungen und verringert dadurch den Entwicklungsaufwand und die Entwicklungskosten für die erfindungsgemäße Messwertkorrektur für diese elektrischen Vorrichtungen gegenüber einer Erzeugung eines speziellen digitalen Modells für jede dieser Vorrichtungen.

Bei einer weiteren Ausgestaltung des erfindungsgemäßen Verfahrens werden dem digitalen Modell als Eingangsgrößen nur Messwerte und Wetterdaten zugeführt. Diese Ausgestaltung des erfindungsgemäßen Verfahrens eignet sich insbesondere für die Erzeugung eines digitalen Modells speziell für eine bestimmte elektrische Vorrichtung. Alternativ werden dem digitalen Modell als Eingangsgrößen Messwerte, Wetterdaten und aus den Messwerten und Wetterdaten generierte Zusatzdaten zugeführt. Diese alternative Ausgestaltung des erfindungsgemäßen Verfahrens eignet sich insbesondere für die Erzeugung eines digitalen Modells für mehrere, einander ähnelnde elektrische Vorrichtungen. Die Zusatzdaten werden dabei verwendet, um Unterschiede zwischen den elektrischen Vorrichtungen zu berücksichtigen. Zusatzdaten sind beispielsweise Ableitungen von Messwerten nach Wetterdaten, die beispielsweise Veränderungen von Messwerten in Abhängigkeit von einer Temperatur oder einem Luftdruck in der Umgebung einer elektrischen Vorrichtung beschreiben.

Ein erfindungsgemäßes Computerprogramm umfasst Befehle, die bei der Ausführung des Computerprogramms durch eine Steuereinheit oder in einer Datenwolke diese veranlassen, das digitale Modell eines erfindungsgemäßen Verfahrens auszuführen.

Eine erfindungsgemäße elektrische Vorrichtung weist eine Steuereinheit, auf der ein erfindungsgemäßes Computerprogramm ausgeführt wird, oder eine Verbindung zu einer Datenwolke, in der ein erfindungsgemäßes Computerprogramm wird, auf.

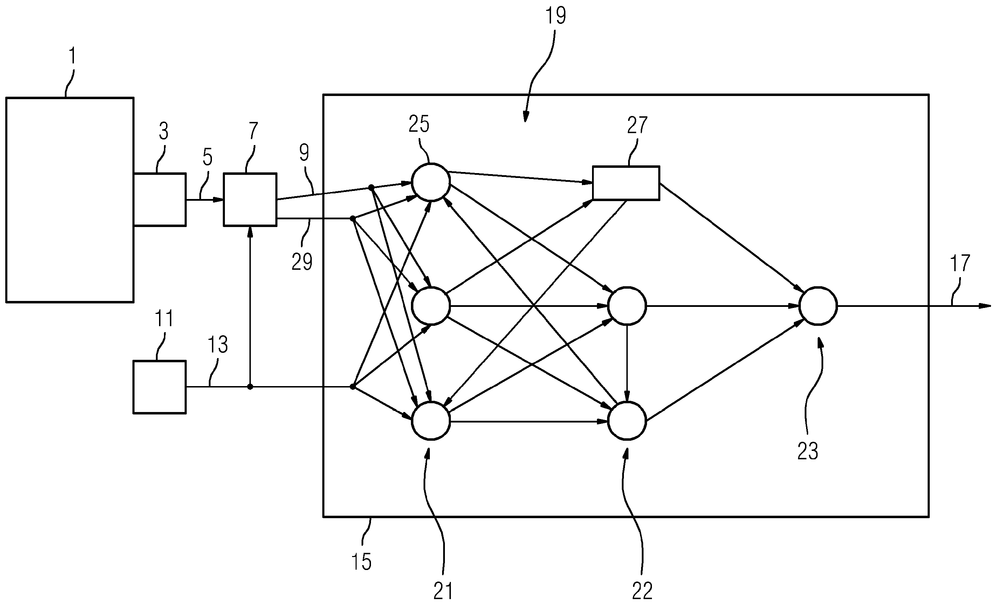

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit der Zeichnung näher erläutert werden.

Dabei zeigt die einzige Figur ein Strukturdiagramm eines Ausführungsbeispiels des erfindungsgemäßen Verfahrens zum Ermitteln einer Fluiddichte eines Fluids in einer gekapselten elektrischen Vorrichtung 1.

Bei dem dargestellten Ausführungsbeispiel werden mit einer Sensoreinheit 3 Messdaten 5 erfasst und aus den Messdaten 5 werden mit einer Verarbeitungseinheit 7 Messwerte 9 für die Fluiddichte abgeleitet. Ferner werden von einer Wetterdatenquelle 11 bereitgestellte Wetterdaten 13 zu Wetterbedingungen in einer Umgebung der elektrischen Vorrichtung 1 gesammelt. Durch maschinelles Lernen wird ein digitales Modell 15 für den Einfluss der Wetterbedingungen auf eine Messabweichung eines Messwerts 9 von der richtigen Fluiddichte erzeugt. Mit dem digitalen Modell 15 wird ein Korrekturwert 17 für Messwerte 9 in Abhängigkeit von den Wetterdaten 13 berechnet und es wird ein Messwert 9 mit dem Korrekturwert 17 korrigiert.

Beispielsweise ist die elektrische Vorrichtung 1 eine gasisolierte Schaltanlage und das Fluid ist ein unter Druck stehendes Isoliergas in der gasisolierten Schaltanlage. Alternativ ist die elektrische Vorrichtung 1 beispielsweise ein ölbefüllter Transformator und das Fluid ist ein Transformatorenöl in dem Transformator. Die Erfindung ist nicht auf eine Art oder einen Typ der elektrischen Vorrichtung eingeschränkt.

Die Sensoreinheit 3 ist eingerichtet, Messdaten 5 zu erfassen, aus denen Messwerte 9 für die Fluiddichte ableitbar sind. Beispielsweise weist die Sensoreinheit 3 Sensoren auf, die eingerichtet sind, einen Fluiddruck des Fluids und eine Fluidtemperatur des Fluids als Messdaten 5 zu erfassen. Alternativ weist die Sensoreinheit 3 beispielsweise zwei Schwingquarze auf, wobei ein Schwingquarz in einer kontrollierten Referenzumgebung betrieben wird und der andere Schwingquarz in dem Fluid betrieben wird und die Sensoreinheit 3 Resonanzfrequenzen der beiden Schwingquarze als Messdaten 5 erfasst. Die Erfindung ist nicht auf eine Art oder einen Typ der Sensoreinheit 3 eingeschränkt.

Die Verarbeitungseinheit 7 ermittelt aus den Messdaten 5 einen Messwert 9 für die Fluiddichte. Wenn die Messdaten 5 beispielsweise einen Fluiddruck des Fluids und eine Fluidtemperatur des Fluids aufweisen, berechnet die Verarbeitungseinheit 7 aus dem Fluiddruck und der Fluidtemperatur einen Messwert 9 für die Fluiddichte. Wenn die Messdaten 5 beispielsweise Resonanzfrequenzen von zwei Schwingquarzen einer oben beschriebenen Sensoreinheit 3 aufweisen, berechnet die Verarbeitungseinheit 7 aus der Differenz der Resonanzfrequenz in dem Fluid und der Resonanzfrequenz in der Referenzumgebung einen Messwert 9 für die Fluiddichte. Die Erfindung ist nicht auf eine Art oder einen Typ der Verarbeitungseinheit 7 eingeschränkt.

Die Wetterdatenquelle 11 ist beispielsweise eine Wetterstation, die die Wetterdaten 13 erfasst. Alternativ ist die Wetterdatenquelle 11 eine Wetterdatenbank, beispielsweise in einer Datenwolke, die die Wetterdaten 13 bereitstellt. Die Wetterdatenquelle 11 kann auch eine Wetterstation und eine derartige Wetterdatenbank umfassen. Die Wetterdaten 13 umfassen beispielsweise eine Temperatur, eine Windgeschwindigkeit, Niederschlag, eine Luftfeuchtigkeit und/oder einen Luftdruck in der Umgebung der elektrischen Vorrichtung 1. Die Erfindung ist nicht auf eine Art oder einen Typ der Wetterdatenquelle 11 eingeschränkt.

Das digitale Modell 15 weist ein künstliches neuronales Netz 19 mit mehreren Schichten 21, 22, 23 vernetzter künstlicher Neuronen 25 und merkfähigen Zellen 27 (LSTM-Zellen) auf. Das neuronale Netz 19 ist als ein rekurrentes neuronales LSTM-Netz ausgebildet. Ein Pfeil von einem Neuron 25 zu einem anderen Neuron 25 oder zu einer merkfähigen Zelle 27 symbolisiert, dass ein Ausgangswert des Neurons 25 dem anderen Neuron 25 oder der merkfähigen Zelle 27 als ein Eingangswert übergeben wird. Entsprechend symbolisiert ein Pfeil von einer merkfähigen Zelle 27 zu einem Neuron 25, dass ein Ausgangswert der merkfähigen Zelle 27 einem Neuron 25 als ein Eingangswert übergeben wird. Das neuronale Netz 19 ist hier nur schematisch mit einer Eingabeschicht 21, einer Zwischenschicht 22, einer Ausgabeschicht 23 und einer merkfähigen Zelle 27 dargestellt. In einer tatsächlichen Ausführung weist das neuronale Netz 19 wesentlich mehr Zwischenschichten 22, Neuronen 25 und merkfähige Zellen 27 auf als in der Figur dargestellt sind.

Optional werden dem digitalen Modell 15 als Eingangsgrößen neben den Messwerten 9 und den Wetterdaten 13 Zusatzdaten 29 zugeführt, die von der Verarbeitungseinheit 7 aus den Messwerten 9 und den Wetterdaten 13 generiert werden. Die Zusatzdaten 29 sind beispielsweise Ableitungen von Messwerten 9 nach Wetterdaten 13, die beispielsweise Veränderungen von Messwerten 9 in Abhängigkeit von einer Temperatur oder einem Luftdruck in der Umgebung einer elektrischen Vorrichtung 1 beschreiben. Derartige Zusatzdaten 29 werden dem digitalen Modell 15 insbesondere dann als Eingangsgrößen zugeführt, wenn das digitale Modell 15 nicht nur speziell für eine bestimmte elektrische Vorrichtung 1 sondern für voneinander verschiedene (aber einander ähnelnde) elektrische Vorrichtungen 1 erzeugt wird.

Beispielsweise werden die Messdaten 5 und/oder die Messwerte 9 in eine Datenwolke übertragen und/oder der Korrekturwert 17 wird mit dem digitalen Modell 15 in einer Datenwolke berechnet.

Zum Trainieren des digitalen Modells 15 können aus Messwerten 9 und/oder Wetterdaten 13 weitere Trainingswerte für Messwerte 9 und/oder Wetterdaten 13 durch so genannte Data Augmentation generiert werden, insbesondere wenn zum Trainieren des digitalen Modells 15 anfänglich nicht genügend geeignete Messwerte 9 und/oder Wetterdaten 13 vorliegen. Beispielsweise werden derartige Trainingswerte durch zeitliches Verschieben von Wetterdaten 13 gegenüber Messwerten 9, Skalierungen von Messwerten 9 und/oder Wetterdaten 13 und/oder Verschiebungen im Wertebereich der Messwerte 9 generiert. Ferner können zum Trainieren des digitalen Modells 15 Trainingswerte zu simulierten Fluidverlusten generiert werden.

Beispielsweise wird mit dem digitalen Modell jeweils ein Korrekturwert 17 für Messwerte 9 berechnet, die innerhalb eines vorgegebenen Berechnungszeitraums, beispielsweise eines Zeitraums von 24 Stunden, erfasst werden.

## Patentansprüche

1. Verfahren zum Ermitteln einer Fluiddichte eines Fluids in einer gekapselten elektrischen Vorrichtung (1), wobei
- mit einer Sensoreinheit (3) Messdaten (5) erfasst werden, aus denen Messwerte (9) für die Fluiddichte abgeleitet werden,
- Wetterdaten (13) zu Wetterbedingungen in einer Umgebung der elektrischen Vorrichtung (1) gesammelt werden,
- durch maschinelles Lernen ein digitales Modell (15) für den Einfluss der Wetterbedingungen auf eine Messabweichung eines Messwerts (9) von der richtigen Fluiddichte erzeugt wird,
- mit dem digitalen Modell (15) ein Korrekturwert (17) für Messwerte (9) in Abhängigkeit von den Wetterdaten (13) berechnet wird und
- ein Messwert (9) mit dem Korrekturwert (17) korrigiert wird.

2. Verfahren nach Anspruch 1, wobei das digitale Modell (15) ein künstliches neuronales Netz (19) mit mehreren Schichten (21, 22, 23) vernetzter künstlicher Neuronen (25) aufweist.

3. Verfahren nach Anspruch 2, wobei das künstliche neuronale Netz (19) ein rekurrentes künstliches neuronales Netz (19) ist.

4. Verfahren nach Anspruch 2 oder 3, wobei das künstliche neuronale Netz (19) wenigstens eine merkfähige Zelle (27) aufweist.

5. Verfahren nach einem der vorhergehenden Ansprüche, wobei die Messdaten (5) und/oder die Messwerte (9) in eine Datenwolke übertragen werden und/oder der Korrekturwert (17) mit dem digitalen Modell (15) in einer Datenwolke berechnet wird.

6. Verfahren nach einem der vorhergehenden Ansprüche, wobei zum Trainieren des digitalen Modells (15) aus Messwerten (9) und/oder Wetterdaten (13) weitere Trainingswerte für Messwerte (9) und/oder Wetterdaten (13) generiert werden.

7. Verfahren nach Anspruch 6, wobei Trainingswerte durch zeitliches Verschieben von Wetterdaten (13) gegenüber Messwerten (9), Skalierungen von Messwerten (9) und/oder Wetterdaten (13) und/oder Verschiebungen im Wertebereich der Messwerte (9) generiert werden.

8. Verfahren nach einem der vorhergehenden Ansprüche, wobei zum Trainieren des digitalen Modells (15) Trainingswerte zu simulierten Fluidverlusten generiert werden.

9. Verfahren nach einem der vorhergehenden Ansprüche, wobei ein Berechnungszeitraum, beispielsweise ein Zeitraum von 24 Stunden, vorgegeben wird und mit dem digitalen Modell (15) der Korrekturwert (17) für Messwerte (9) berechnet wird, die innerhalb des Berechnungszeitraums erfasst werden.

10. Verfahren nach einem der vorhergehenden Ansprüche, wobei die Wetterdaten (13) eine Temperatur, eine Windgeschwindigkeit, Niederschlag, eine Luftfeuchtigkeit und/oder einen Luftdruck in der Umgebung der elektrischen Vorrichtung (1) umfassen.

11. Verfahren nach einem der vorhergehenden Ansprüche, wobei das digitale Modell (15) speziell für eine elektrische Vorrichtung (1) oder für voneinander verschiedene elektrische Vorrichtungen (1) erzeugt wird.

12. Verfahren nach einem der vorhergehenden Ansprüche, wobei dem digitalen Modell (15) als Eingangsgrößen nur Messwerte (9) und Wetterdaten (13) zugeführt werden.

13. Verfahren nach einem der Ansprüche 1 bis 11, wobei dem digitalen Modell (15) als Eingangsgrößen Messwerte (9), Wetterdaten (13) und aus den Messwerten (9) und Wetterdaten (13) generierte Zusatzdaten (29) zugeführt werden.

14. Computerprogramm, umfassend Befehle, die bei der Ausführung des Computerprogramms durch eine Steuereinheit oder in einer Datenwolke diese veranlassen, das digitale Modell (15) eines Verfahrens nach einem der vorhergehenden Ansprüche auszuführen.

15. Gekapselte elektrische Vorrichtung (1) mit einer Steuereinheit, auf der ein Computerprogramm nach Anspruch 14 ausgeführt wird, oder System aus einer gekapselten elektrischen Vorrichtung (1) und einer damit verbundene Datenwolke, in der ein Computerprogramm nach Anspruch 14 ausgeführt wird.

## Claims

1. A method for determining a fluid density of a fluid in an encapsulated electrical equipment (1), wherein
- measuring data (5), from which measured values (9) for the fluid density are derived, are acquired with a sensor unit (3),
- weather data (13) on weather conditions in an environment of the electrical equipment (1) are collected,
- a digital model (15) for the influence of the weather conditions on a measurement deviation of a measured value (9) from the correct fluid density is created by machine learning, a correction value (17) for measured values (9) is calculated as a function of the weather data (13) with the digital model (15), and
- a measured value (9) is corrected with the correction value (17).

2. The method according to claim 1, wherein the digital model (15) has an artificial neural network (19) comprising a plurality of layers (21, 22, 23) of crosslinked artificial neurons (25).

3. The method according to claim 2, wherein the artificial neural network (19) is a recurrent artificial neural network (19).

4. The method according to claim 2 or 3, wherein the artificial neural network (19) has at least one retentive cell (27).

5. The method according to any one of the preceding claims, wherein the measuring data (5) and/or the measured values (9) are transmitted into a data cloud and/or the correction value (17) is calculated with the digital model (15) in a data cloud.

6. The method according to any one of the preceding claims, wherein further training values for measured values (9) and/or weather data (13) are generated from measured values (9) and/or weather data (13) for training the digital model (15).

7. The method according to claim 6, wherein training values are generated by temporally shifting weather data (13) relative to measured values (9), scaling measured values (9) and/or weather data (13), and/or shifts in the value range of the measured values (9).

8. The method according to any one of the preceding claims, wherein training values for simulated fluid losses are generated for training the digital model (15).

9. The method according to any one of the preceding claims, wherein a calculation period, such as a period of 24 hours, is predefined, and the correction value (17) for measured values (9) acquired within the calculation period is calculated with the digital model (15).

10. The method according to any one of the preceding claims, wherein the weather data (13) comprises a temperature, wind speed, precipitation, humidity, and/or atmospheric pressure in the environment of the electrical equipment (1).

11. The method according to any one of the preceding claims, wherein the digital model (15) is created specifically for an electrical equipment (1) or for pieces of electrical equipment (1) that are different from one another.

12. The method according to any one of the preceding claims, wherein only measured values (9) and weather data (13) are supplied to the digital model (15) as input variables.

13. The method according to any one of claims 1 to 11, wherein measured values (9), weather data (13), and additional data (29) generated from the measured values (9) and weather data (13) are supplied to the digital model (15) as input variables.

14. A computer program comprising instructions which, when the computer program is executed by a control unit or in a data cloud, cause it to execute the digital model (15) of a method according to any one of the preceding claims.

15. An encapsulated electrical equipment (1) comprising a control unit on which a computer program according to claim 14 is executed, or a system from an encapsulated electrical equipment (1) and an associated data cloud, in which a computer program according to claim 14 is executed.

## Revendications

1. Procédé de détermination d'une densité de fluide dans un dispositif électrique encapsulé (1), dans lequel
- un capteur (3) acquiert des données de mesure (5) à partir desquelles sont dérivées des valeurs mesurées (9) de la densité du fluide ;
- des données météorologiques (13) relatives aux conditions météorologiques dans l'environnement du dispositif électrique (1) sont collectées ;
- un modèle numérique (15) de l'influence des conditions météorologiques sur un écart de mesure entre une valeur mesurée (9) et la densité correcte du fluide est généré par apprentissage automatique ;
- une valeur de correction (17) pour les valeurs mesurées (9) est calculée à l'aide du modèle numérique (15) en fonction des données météorologiques (13) ; et
- une valeur mesurée (9) est corrigée avec la valeur de correction (17).

2. Procédé selon la revendication 1, dans lequel le modèle numérique (15) comprend un réseau neuronal artificiel (19) composé de plusieurs couches (21, 22, 23) de neurones artificiels interconnectés (25).

3. Procédé selon la revendication 2, dans lequel le réseau neuronal artificiel (19) est un réseau neuronal artificiel récurrent (19).

4. Procédé selon la revendication 2 ou 3, dans lequel le réseau neuronal artificiel (19) comporte au moins une cellule mémoire (27).

5. Procédé selon l'une quelconque des revendications précédentes, dans lequel les données de mesure (5) et/ou les valeurs mesurées (9) sont transférées vers un nuage de données et/ou la valeur de correction (17) est calculée avec le modèle numérique (15) dans un nuage de données.

6. Procédé selon l'une des revendications précédentes, dans lequel, pour l'apprentissage du modèle numérique (15), d'autres valeurs d'apprentissage pour des valeurs mesurées (9) et/ou des données météorologiques (13) sont générées à partir des valeurs mesurées (9) et/ou des données météorologiques (13).

7. Procédé selon la revendication 6, dans lequel des valeurs d'apprentissage sont générées par le décalage temporel des données météorologiques (13) par rapport aux valeurs mesurées (9), la mise à l'échelle des valeurs mesurées (9) et/ou des données météorologiques (13) et/ou le décalage de la plage de valeurs des valeurs mesurées (9).

8. Procédé selon l'une quelconque des revendications précédentes, dans lequel des valeurs d'apprentissage pour des pertes de fluide simulées sont générées pour l'apprentissage du modèle numérique (15).

9. Procédé selon l'une quelconque des revendications précédentes, dans lequel une période de calcul, par exemple une période de 24 heures, est spécifiée et le modèle numérique (15) est utilisé pour calculer la valeur de correction (17) pour les valeurs mesurées (9) qui sont enregistrées dans la période de calcul.

10. Procédé selon l'une quelconque des revendications précédentes, dans lequel les données météorologiques (13) comprennent une température, une vitesse du vent, des précipitations, une humidité et/ou une pression atmosphérique dans l'environnement du dispositif électrique (1).

11. Procédé selon l'une quelconque des revendications précédentes, dans lequel le modèle numérique (15) est généré spécifiquement pour un dispositif électrique (1) ou pour des dispositifs électriques (1) différents.

12. Procédé selon l'une quelconque des revendications précédentes, dans lequel seules des valeurs mesurées (9) et des données météorologiques (13) sont fournies au modèle numérique (15) comme variables d'entrée.

13. Procédé selon l'une quelconque des revendications 1 à 11, dans lequel des valeurs mesurées (9), des données météorologiques (13) et des données supplémentaires (29) générées à partir des valeurs mesurées (9) et des données météorologiques (13) sont fournies au modèle numérique (15) en tant que variables d'entrée.

14. Programme informatique comprenant des instructions qui, lorsque le programme informatique est exécuté par une unité de commande ou dans un nuage de données, amènent l'unité de commande à exécuter le modèle numérique (15) d'un procédé selon l'une quelconque des revendications précédentes.

15. Dispositif électrique encapsulé (1) comprenant une unité de commande sur laquelle un programme informatique selon la revendication 14 est exécuté, ou système comprenant un dispositif électrique encapsulé (1) et un nuage de données connecté à celui-ci, dans lequel un programme informatique selon la revendication 14 est exécuté.
